# EUROPÄISCHE PATENTANMELDUNG

(11) **EP 4 454 985 A1**
(43) Veröffentlichungstag der Anmeldung: **30.10.2024**
(21) Anmeldenummer: 24172098.6
(22) Anmeldetag: 24.04.2024
(51) Int. Cl.: B62M 6/45, B62M 6/55, B62M 11/14

(54) **VERFAHREN ZUM BETREIBEN EINER ANTRIEBSEINRICHTUNG FÜR EIN MUSKELBETRIEBENES FAHRZEUG**

(30) Priorität: 27.04.2023 DE 102023203892
(71) Anmelder: ZF Friedrichshafen AG, 88046 Friedrichshafen (DE)
(72) Erfinder: Kaltenbach, Johannes, 88048 Friedrichshafen (DE); Kutter, Fabian, 88079 Kressbronn (DE); Griesmeier, Uwe, 88677 Markdorf (DE); Rechenbach, Philipp, 88677 Markdorf (DE); Hodrius, Thomas, 88171 Weiler-Simmerberg (DE); Riess, Günter, 88097 Eriskirch / Mariabrunn (DE)
(74) Vertreter: ZF Friedrichshafen AG

(57) **Zusammenfassung**

Die vorliegende Erfindung bezieht sich auf ein Verfahren zum Betreiben einer Antriebseinrichtung (1) für ein muskelbetriebenes Fahrzeug. Die Antriebseinrichtung (1) weist eine Pedalwelle (2), ein als Planetengetriebe ausgestaltetes Überlagerungsgetriebe (6) mit einem ersten (7), zweiten (8) und dritten Element (10), ein mit einem Rad (42) des muskelbetriebenen Fahrzeugs mechanisch wirkverbindbares Abtriebsrad (5) und eine elektrische Maschine (12) auf. Die Pedalwelle (2) ist an das zweite Element (8), das Abtriebsrad (5) an das dritte Element (10) und die elektrische Maschine (12) an das erste Element (7) des Überlagerungsgetriebes (6) mechanisch angebunden. Das Verfahren umfasst ein Erfassen (I) der Ist-Drehzahl des Abtriebsrads (5), ein Ermitteln (II) einer Soll-Drehzahl der Pedalwelle (2), und ein Ansteuern (III) der elektrischen Maschine (12) basierend auf der erfassten Ist-Drehzahl und der ermittelten Soll-Drehzahl. Ferner bezieht sich die vorliegende Erfindung auf eine Steuereinrichtung (30), die eingerichtet ist, um solch ein Verfahren auszuführen, auf eine Antriebseinrichtung (1) mit solch einer Steuereinrichtung (30), und auf ein Fahrzeug mit solch einer Antriebseinrichtung (1).

## Beschreibung

### Technisches Gebiet

Die vorliegende Erfindung bezieht sich auf ein Verfahren zum Betreiben einer Antriebseinrichtung für ein muskelbetriebenes Fahrzeug, bei dem eine Antriebskraft zum Antreiben des Fahrzeugs zumindest zeitweise durch eine Muskelkraft eines Fahrers erzeugt wird. Ferner bezieht sich die vorliegende Erfindung auf eine Steuereinrichtung, die eingerichtet ist, um solch ein Verfahren auszuführen, auf eine Antriebseinrichtung mit solch einer Steuereinrichtung, und auf ein Fahrzeug mit solch einer Antriebseinrichtung.

### Stand der Technik

Aus der DE 10 2017 219 607 A1 ist ein stufenloser Pedelec-Antrieb mit zwei elektrischen Maschinen bekannt, der ein als Planetengetriebe ausgebildetes Überlagerungsgetriebe aufweist. Die erste elektrische Maschine dient zum Einstellen einer gewünschten Übersetzung und damit auch zum Einstellen einer gewünschten Trittfrequenz, während die zweite elektrische Maschine zum Einstellen einer gewünschten Drehmomentunterstützung für den Fahrer ausgebildet ist. Aus der DE 10 2020 209 373 A1 ist ein Verfahren zur Steuerung einer Antriebseinrichtung eines Fahrrads bekannt, bei welchem die Drehzahl der Pedalwelle mittels einer Sensoreinrichtung erfasst wird.

### Darstellung der Erfindung

Die vorliegende Erfindung bezieht sich auf ein Verfahren zum Betreiben einer Antriebseinrichtung für ein muskelbetriebenes Fahrzeug. Bei dem muskelbetriebenen Fahrzeug kann es sich um ein Einspurfahrzeug, beispielsweise um ein Zweirad in der Form eines Pedelecs oder E-Bikes, handeln. Das muskelbetriebene Fahrzeug kann alternativ ein Mehrspurfahrzeug sein, beispielsweise ein Dreirad oder ein Fahrzeug mit vier Rädern. Das muskelbetriebene Fahrzeug kann auch eine andere Ausgestaltung aufweisen. Die Antriebseinrichtung weist eine Pedalwelle auf, an welcher Pedale angebracht sein können, um eine Muskelkraft eines Fahrers auf die Pedalwelle aufzubringen. Ferner umfasst die Antriebseinrichtung ein Abtriebsrad, welches mit einem Rad des muskelbetriebenen Fahrzeugs, beispielsweise einem Hinterrad, mechanisch wirkverbunden werden kann, um eine Antriebskraft von dem Abtriebsrad auf das Rad des Fahrzeugs zu dessen Antrieb zu übertragen. Bei dem Abtriebsrad kann es sich um ein Kettenrad, beispielsweise ein Kettenblatt, handeln. Das Abtriebsrad kann mittels eines Endlosumlaufelements, beispielsweise einer Kette oder einem Riemen, mit einem Rad des Fahrzeugs mechanisch gekoppelt sein. In dem Drehmomentübertragungspfad zwischen dem Abtriebsrad und dem Rad des Fahrzeugs kann ein Freilauf vorgesehen sein, beispielsweise ein Nabenfreilauf. Der Freilauf kann sowohl mit dem Rad als auch mit dem Abtriebsrad mechanisch wirkverbunden sein. Die Antriebseinrichtung kann ferner ein Gehäuse aufweisen, in dem einige oder auch alle Komponenten der Antriebseinrichtung aufgenommen sein können. Das Gehäuse kann an dem Fahrzeug so montiert sein, dass sich das Gehäuse an dem Fahrzeug abstützt. Bei dem Gehäuse kann es sich um ein stationäres Bauteil handeln, welches im Betrieb der Antriebseinrichtung nicht bewegt wird.

Darüber hinaus weist die Antriebseinrichtung ein als Planetengetriebe ausgestaltetes Überlagerungsgetriebe auf. Bei dem Planetengetriebe kann es sich um einen Minus-Planetenradsatz handeln. Das Planetengetriebe umfasst ein erstes, zweites und drittes Element, wobei eines der Elemente ein Sonnenrad, ein anderes der Elemente ein Planetenträger und noch ein weiteres der Elemente ein Hohlrad ausbilden kann. Der Planetenträger kann mindestens ein Planetenrad aufweisen, welches sowohl mit dem Hohlrad als auch mit dem Sonnenrad kämmen kann. Darüber hinaus umfasst die Antriebseinrichtung eine elektrische Maschine, die einen Stator und einen Rotor aufweisen kann. Der Stator kann an einem Gehäuse der Antriebseinrichtung drehfest festgesetzt sein. Die elektrische Maschine kann mit einer nicht gezeigten Batterieeinrichtung elektrisch verbunden sein und von dieser mit elektrischer Energie versorgt werden. Die elektrische Maschine kann koaxial zu dem Überlagerungsgetriebe angeordnet sein.

Die Pedalwelle ist an das zweite Element des Überlagerungsgetriebes mechanisch angebunden. In einer Ausführungsform wird die mechanische Anbindung der Pedalwelle an das zweite Element des Überlagerungsgetriebes dahingehend bereitgestellt, dass ein Freilauf in dem Drehmomentübertragungspfad von der Pedalwelle zu dem zweiten Element angeordnet ist. In einer alternativen Ausführungsform ist die Pedalwelle mit dem zweiten Element des Überlagerungsgetriebes permanent drehfest ohne weitere Komponenten dazwischen verbunden. Das Abtriebsrad ist an das dritte Element des Überlagerungsgetriebes mechanisch angebunden. In einer Ausführungsform ist das Abtriebsrad mit dem dritten Element des Überlagerungsgetriebes permanent drehfest verbunden. Darüber hinaus ist die elektrische Maschine an das erste Element des Überlagerungsgetriebes mechanisch angebunden. In einer Ausführungsform wird die mechanische Anbindung über ein Vorübersetzungsgetriebe, welches einen oder mehrere Planetenradsätze aufweisen kann, bereitgestellt. Der oder die Planetenradsätze des Vorübersetzungsgetriebes können jeweils als Minus-Planetenradsatz ausgebildet und in einer Ausführungsform koaxial zu dem Überlagerungsgetriebe vorgesehen sein. Ist eine Komponente an ein Element des Überlagerungsgetriebes mechanisch angebunden, so kann eine mechanische Kopplung zwischen dem Element des Überlagerungsgetriebes und der Komponente vorliegen, welche sich nicht durch das Überlagerungsgetriebe selbst erstreckt, sondern lediglich zwischen dem Element und der Komponente ausgebildet ist.

In einer Ausführungsform ist das erste Element des Überlagerungsgetriebes als Sonnenrad, das zweite Element des Überlagerungsgetriebes als Planetenträger und das dritte Element des Überlagerungsgetriebes als Hohlrad ausgebildet. Die vorliegende Erfindung ist jedoch nicht auf eine derartige Ausbildung beschränkt. So kann das erste Element beispielsweise auch als Planetenträger oder Hohlrad, das zweite Element als Sonnenrad oder Hohlrad und das dritte Element als Sonnenrad oder Planetenträger ausgebildet sein kann. Während die elektrische Maschine, das als Planetengetriebe ausgestaltete Überlagerungsgetriebe und gegebenenfalls das Vorübersetzungsgetriebe koaxial zueinander angeordnet sein können, können einige oder alle dieser Komponenten auch achsparallel zueinander angeordnet sein. In einer Ausführungsform ist das Vorübersetzungsgetriebe nicht vorgesehen, so dass die elektrische Maschine beispielsweise permanent drehfest mit dem ersten Element des Überlagerungsgetriebes verbunden sein kann. Ferner kann das als Planetengetriebe ausgestaltete Überlagerungsgetriebe einen Stufenplanetensatz oder eine sonstige Ausgestaltung aufweisen.

Sind zwei Elemente mechanisch wirkverbunden, so sind diese unmittelbar oder mittelbar derart miteinander gekoppelt, dass eine Bewegung des einen Elements in zumindest einer Bewegungsrichtung eine Reaktion des anderen Elements bewirkt. Beispielsweise kann eine mechanische Wirkverbindung durch eine formschlüssige oder reibschlüssige Verbindung bereitgestellt werden. Die mechanische Wirkverbindung kann einem Kämmen von korrespondierenden Verzahnungen der zwei Elemente entsprechen. Zwischen den Elementen können dabei weitere Elemente, beispielsweise eine oder mehrere Stirnradstufen, vorgesehen sein. Unter einer permanent drehfesten Verbindung zweier Elemente wird hingegen eine Verbindung verstanden, bei welcher die beiden Elemente zu allen bestimmungsgemäßen Zuständen des Getriebes starr miteinander gekoppelt sind. Die Elemente können dabei als drehfest miteinander verbundene Einzelkomponenten oder auch einstückig vorliegen.

Zwischen zwei mechanisch wirkverbundenen Komponenten kann ein Freilauf vorgesehen sein, der bewirkt, dass eine Bewegung des einen Elements lediglich in eine Drehrichtung eine Reaktion des anderen Elements hervorruft, während bei einer Bewegung in einer entgegengesetzten Drehrichtung keine Reaktion des anderen Elements auftritt. Der Freilauf kann ein erstes und ein weiteres Element aufweisen und so ausgestaltet sein, dass eine relative Drehung zwischen den Elementen des Freilaufs nur in einer ersten Richtung gestattet ist, während die Relativdrehung zwischen den Elementen in der zu der ersten Richtung entgegengesetzten Richtung unterbunden wird. Zu diesem Zweck können Klinkenelemente, Verzahnungen oder Ähnliches vorgesehen sein, die optional gegeneinander verspannt sein können, um ineinander einzurasten. Der Aufbau des Freilaufs ist frei wählbar, solange die beschriebene Funktion des Freilaufs erfüllt wird.

Das Verfahren der vorliegenden Erfindung umfasst ein Erfassen der Ist-Drehzahl des Abtriebsrads. Bei der Ist-Drehzahl des Abtriebsrads handelt es sich um eine aktuell vorherrschende Ist-Größe und demnach nicht um eine angestrebte Ziel- beziehungsweise Soll-Größe. Die direkt oder indirekt erfasste Drehzahl des Abtriebsrads kann mittels eines oder mehrerer Drehzahlsensoren erfasst werden. Die Drehzahl des Abtriebsrads kann dabei unmittelbar am Abtriebsrad selbst oder an einer Komponente, die mit dem Abtriebsrad in einer konstanten mechanischen Beziehung steht, erfasst werden. Beispielsweise kann die Drehzahl an einer Komponente erfasst werden, die über ein Getriebe mit dem Abtriebsrad mechanisch wirkverbunden ist, wobei das Getriebe beispielsweise eine konstante Übersetzung aufweisen kann. In einer Ausführungsform kann die Drehzahl des Abtriebsrads auch über die Drehzahl eines mit dem Abtriebsrad in fester mechanischer Verbindung stehenden Rads des Fahrzeugs erfasst werden. Ist das Abtriebsrad beispielsweise mittels eines Endlosumlaufelements mit einem Rad eines Fahrrads mechanisch wirkverbunden, wobei das Rad über einen Freilauf drehbar auf einer Achse gelagert ist, kann die Drehzahl des Abtriebsrads über die Drehzahl des Rads erfasst werden. Dies kann unter der Annahme erfolgen, dass der Freilauf am Rad keine Differenzdrehzahl aufweist. Das Verfahren kann einen Prüfschritt zum Prüfen auf solch eine Differenzdrehzahl am Freilauf des Rads aufweisen.

Darüber hinaus umfasst das Verfahren ein Ermitteln einer Soll-Drehzahl der Pedalwelle, also einer Soll-Trittfrequenz für den Fahrer. Bei der Soll-Drehzahl der Pedalwelle handelt es um eine Zielgröße für die Drehzahl der Pedalwelle. Die Soll-Drehzahl der Pedalwelle kann über eine beliebige Funktion ermittelt werden, beispielsweise in Abhängigkeit von einer Soll-Übersetzung des Überlagerungsgetriebes, wie im Folgenden im Detail beschrieben. In einer alternativen Ausgestaltung kann die Soll-Drehzahl der Pedalwelle auf Basis einer Kennlinie ermittelt werden, welche eine Soll-Übersetzung nicht explizit definiert, sondern lediglich einen Zusammenhang zwischen der Fahrgeschwindigkeit des Fahrzeugs und der Soll-Drehzahl der Pedalwelle beschreibt. Bei einer Fahrgeschwindigkeit von 0, also im Stillstand, kann die Soll-Drehzahl der Pedalwelle 0 betragen. Mit zunehmender Fahrgeschwindigkeit kann die Soll-Drehzahl angehoben werden, wobei sie beispielsweise ab einer bestimmten Fahrgeschwindigkeit konstant gehalten werden kann. Auch andere Ausgestaltungen zum Ermitteln der Soll-Drehzahl der Pedalwelle sind im Rahmen der vorliegenden Erfindung möglich.

Darüber hinaus umfasst das Verfahren ein Ansteuern der elektrischen Maschine basierend auf der erfassten Ist-Drehzahl des Abtriebsrads und der ermittelten Soll-Drehzahl der Pedalwelle. In anderen Worten wird die elektrische Maschine auf Basis der aktuell vorherrschenden Drehzahl des Abtriebsrads und der angestrebten Drehzahl der Pedalwelle angesteuert. Unter einem Ansteuern der elektrischen Maschine kann ein Ausgeben eines Signals an die elektrische Maschine verstanden werden, das zu einem bestimmten Betrieb der elektrischen Maschine führt. Beispielsweise kann das Ansteuern erfolgen, um die elektrische Maschine auf eine bestimmte Drehzahl zu beschleunigen oder abzubremsen. In einer alternativen Ausführungsform erfolgt die Ansteuerung der elektrischen Maschine hingegen, um diese mit einem bestimmten Drehmoment zu betreiben.

In vorteilhafter Weise ist im Rahmen des Verfahrens zum Betreiben der Antriebseinrichtung gemäß der vorliegenden Erfindung kein Erfassen der Drehzahl der Pedalwelle erforderlich. Stattdessen kann mit dem Verfahren der vorliegenden Erfindung auf bereits vorhandene Sensorik zurückgegriffen werden, was ein Betreiben der Antriebseinrichtung, vor allem ein Ansteuern der elektrischen Maschine, in einfacher, robuster und kosteneffizienter Art und Weise ermöglicht. Würde hingegen die Drehzahl der Pedalwelle erfasst werden, wäre hierfür eine konstruktiv aufwendige Sensorik erforderlich, um die Erfassung der Tretkurbeldrehzahl mit einer geforderten Genauigkeit zu ermöglichen. Eine derartig konstruktiv aufwendige Sensorik ist mit der vorliegenden Erfindung nicht vonnöten, da zur Ansteuerung der elektrischen Maschine, beispielsweise zur dynamischen Drehzahlregelung der Trittfrequenz, auf die Ist-Drehzahl des Abtriebsrads und die Soll-Drehzahl der Pedalwelle zurückgegriffen werden kann.

Im Rahmen einer Ausführungsform umfasst die Antriebseinrichtung eine weitere mit dem Abtriebsrad mechanisch wirkverbundene elektrische Maschine. Die weitere elektrische Maschine kann einen Stator und einen Rotor aufweisen, wobei der Stator permanent drehfest an einem Gehäuse der Antriebseinrichtung festgesetzt sein kann. Der Rotor der weiteren elektrischen Maschine kann über ein Getriebe mit dem Abtriebsrad und damit auch dem dritten Element des Überlagerungsgetriebes mechanisch wirkverbunden sein. In einer Ausführungsform ist der Rotor der weiteren elektrischen Maschine über eine als Planetenstufe ausgebildete Vorübersetzung und ein Stirnradgetriebe an das dritte Element des Überlagerungsgetriebes mechanisch angebunden. Die weitere elektrische Maschine kann achsparallel zu der elektrischen Maschine angeordnet sein. Im Rahmen der vorliegenden Ausführungsform umfasst das Erfassen der Ist-Drehzahl des Abtriebsrads dabei ein Erfassen einer Drehzahl der weiteren elektrischen Maschine, beispielsweise der Drehzahl des Rotors der weiteren elektrischen Maschine. Hierfür kann auf einen in der weiteren elektrischen Maschine vorgesehenen Drehzahlsensor zurückgegriffen werden, welcher für den bestimmungsgemäßen Betrieb der weiteren elektrischen Maschine ohnehin erforderlich sein kann. Im Ergebnis kann so die Ist-Drehzahl des Abtriebsrads mit sehr hoher Genauigkeit erfasst werden, ohne dass zusätzliche Sensorik erforderlich ist. Dies gilt vor allem dann, wenn die weitere elektrische Maschine mit dem Abtriebsrad über ein ins Schnelle übersetzendes Getriebe mechanisch wirkverbunden ist. In diesem Fall dreht die elektrische Maschine schneller als das Abtriebsrad selbst, weshalb eine Drehzahl mit hoher Genauigkeit erfasst werden kann. Die vorliegende Ausführungsform ermöglicht demnach das Erfassen einer Drehzahl des Abtriebsrads mit besonders hoher Genauigkeit und auf besonders einfache Art und Weise.

Im Rahmen einer Ausführungsform umfasst das Ansteuern der elektrischen Maschine ein Bestimmen einer Soll-Drehzahl der elektrischen Maschine basierend auf der erfassten Ist-Drehzahl des Abtriebsrads und der ermittelten Soll-Drehzahl der Pedalwelle. Hierfür kann beispielsweise eine Drehzahlgleichung für den Überlagerungsplanetenradsatz verwendet werden. Die Drehzahlgleichung kann bei bekannter Standübersetzung des Planetenradsatzes, bei bekannter Ist-Drehzahl des Abtriebsrads und bei bekannter Soll-Drehzahl der Pedalwelle dem ersten Element, welches mit der elektrischen Maschine mechanisch wirkverbunden ist, eine eindeutige Soll-Drehzahl zuweist. Bei der Drehzahlgleichung kann es sich beispielsweise um die Willis-Gleichung handeln. Ferner kann im Rahmen der vorliegenden Ausführungsform die aktuelle Drehzahl der elektrischen Maschine erfasst werden. Die Drehzahl kann mittels eines oder mehrerer Drehzahlsensoren direkt oder indirekt gemäß den obigen Ausführungen erfasst werden. In einer Ausführungsform wird die Drehzahl der elektrischen Maschine mittels eines in dieser ohnehin vorgesehenen Drehzahlsensors erfasst. Basierend auf einem Unterschied zwischen der bestimmten Soll-Drehzahl der elektrischen Maschine und der erfassten Ist-Drehzahl der elektrischen Maschine kann im Rahmen der vorliegenden Ausführungsform eine Stellgröße an die elektrische Maschine ausgegeben werden.

In einer Ausführungsform weist die Antriebseinrichtung beispielsweise einen Drehzahlregler auf, welcher als Eingangsgröße die Soll-Drehzahl und die Ist-Drehzahl der elektrischen Maschine erhält und auf Basis eines Vergleichs dieser Größen eine Stellgröße an die elektrische Maschine ausgibt. Bei der Stellgröße kann es sich beispielsweise um ein Soll-Drehmoment der elektrischen Maschine handeln. Das Soll-Drehmoment kann an einen Wechselrichter mit Stromregelung ausgegeben werden, welcher die elektrische Maschine auf das Soll-Drehmoment, beispielsweise durch einen Vergleich des Soll-Drehmoments mit dem Ist-Drehmoment, einregelt. Im Rahmen der vorliegenden Ausführungsform kann demnach die Pedalwelle auf eine angestrebte Soll-Drehzahl eingeregelt werden, ohne dass Sensorik zur Drehzahlerfassung der Pedalwelle erforderlich ist.

Das Ansteuern der elektrischen Maschine kann in einer Ausführungsform dabei ferner ein Begrenzen der an die elektrische Maschine auszugebenden Stellgröße, beispielsweise des an die elektrische Maschine ausgegebenen Soll-Drehmoments, aufweisen. Beispielsweise wird die Stellgröße auf derartige Werte begrenzt, welche für die Tretkurbel abstützend wirken. In anderen Worten werden im Rahmen des Verfahrens der vorliegenden Ausführungsform nur solche Werte an die elektrische Maschine ausgegeben, die zu einem einer Drehrichtung der Pedalwelle entgegenwirkenden Betrieb der elektrischen Maschine führen. Damit wird sichergestellt, dass die elektrische Maschine das Pedalmoment des Fahrers abstützt. Gleichzeitig wird ausgeschlossen, dass die elektrische Maschine die Pedalwelle antreibt, was sich für den Fahrer unangenehm anfühlen könnte und auch die unerwünschte Folge haben könnte, dass der Fahrer die Füße vom Pedal nimmt und das Fahrrad dennoch selbstständig weiterfährt.

Im Rahmen einer Ausführungsform umfasst das Ansteuern der elektrischen Maschine ferner ein Überprüfen, ob die Soll-Drehzahl der elektrischen Maschine für eine bestimmte Zeitdauer im Wesentlichen 0 beträgt. Ein Wert von im Wesentlichen 0 kann dabei genau 0 betragen oder einen Wert in der Nähe von 0 aufweisen, welcher zu vergleichbaren Zuständen in der Antriebseinrichtung wie ein Wert von genau 0 führt. Bei der bestimmten Zeitdauer kann es sich um einen Zeitraum von einigen Sekunden oder aber auch einigen Minuten handeln. In einer Ausführungsform handelt es sich beispielsweise um einen Zeitraum von 1 bis 10 Sekunden, beispielsweise weniger als 5 Sekunden, wie beispielsweise 2 Sekunden. Gleichzeitig kann im Rahmen der vorliegenden Ausführungsform überprüft werden, ob die an die elektrische Maschine ausgegebene Stellgrö-βe, beispielsweise das an die elektrische Maschine ausgegebene Soll-Drehmoment, betragsmäßig einen bestimmten Schwellenwert überschreitet und demnach beispielsweise ungleich im Wesentlichen 0 ist. Liegen beide Bedingungen vor, kann im Rahmen der vorliegenden Ausführungsform die Soll-Drehzahl der elektrischen Maschine auf eine Mindestdrehzahl angehoben werden. Die Mindestdrehzahl kann sowohl vorwärts- als auch rückwärtsdrehend sein.

Dies hat zum Vorteil, dass die Leistungselektronik der elektrischen Maschine gleichmäßig belastet und vermieden wird, dass die Leistungshalbleiter einer Phase zu warm werden. Dabei kann im Fahrzeugstillstand und bei geringen Fahrgeschwindigkeiten das Vorzeichen der Mindestdrehzahl so gewählt werden, dass sich die Trittfrequenz erhöht. Ist im Fahrzeugstillstand die Soll-Drehzahl der elektrischen Maschine beispielsweise gleich 0, da sich das Pedal nicht bewegen soll, beispielsweise weil das Fahrzeug gebremst wird, liegt jedoch eine Belastung eines Pedals durch den Fahrer vor, wird das Pedal zunächst mithilfe der elektrischen Maschine festgehalten. Nach Ablauf der vordefinierter Zeitspanne, beispielsweise der oben genannten 2 Sekunden, wird das Pedal langsam freigegeben, da die elektrische Maschine beginnt, mit einer Mindestdrehzahl zu drehen.

Im Rahmen einer Ausführungsform kann ferner das durch einen Fahrer auf die Pedalwelle aufgebrachte Moment bestimmt werden. Hierfür kann auf einen Drehmomentwert eines Reglers der elektrischen Maschine zurückgegriffen werden. Wird an den Regler beispielsweise das oben beschriebene Soll-Drehmoment der elektrischen Maschine übermittelt, kann dieses Soll-Drehmoment verwendet werden, um das durch den Fahrer auf die Pedalwelle aufgebrachte Moment zu bestimmen. Dies kann eine ausreichende Genauigkeit erreichen, weil davon ausgegangen werden kann, dass das Ist-Moment der elektrischen Maschine dem Soll-Drehmoment der elektrischen Maschine gut folgt. In einer alternativen Ausführungsform wird hingegen das aktuell vorherrschende Ist-Drehmoment der elektrischen Maschine, welches beispielsweise in dem Regler bekannt ist, erfasst und verwendet. Zwischen dem ersten Element, an welches die elektrische Maschine angebunden ist, und dem zweiten Element, an welches die Pedalwelle angebunden ist, kann ein festes und lediglich von der Standübersetzung abhängiges Drehmomentverhältnis vorliegen. Durch Kenntnis des Drehmoments der elektrischen Maschine kann demnach auf das Drehmoment des Fahrers an der Pedalwelle geschlossen werden. So kann im Rahmen der vorliegenden Erfindung auf einfache Art und Weise das durch den Fahrer auf die Pedalwelle aufgebrachte Moment bestimmt werden, ohne dass hierfür zusätzliche Sensorik erforderlich ist.

Weist die Antriebseinrichtung die weitere elektrische Maschine auf, wie oben beschrieben, kann diese weitere elektrische Maschine dabei auf Basis des bestimmten durch den Fahrer auf die Pedalwelle aufgebrachten Moments angesteuert werden. Beispielsweise wird über eine Strategiefunktion eine gewünschte gesamte Unterstützungsleistung für den Fahrer durch beide elektrischen Maschinen definiert. Die aktuelle Leistung der einen elektrischen Maschine kann aus dem Ist-Drehmoment und/oder dem Soll-Drehmoment ermittelt werden, wie oben beschrieben. Die Soll-Leistung für die weitere elektrische Maschine kann nun aus der Differenz zwischen der gewünschten Gesamtleistung, welche beispielsweise aus der Strategiefunktion bestimmt wird, und der Leistung der anderen elektrischen Maschine ermittelt werden. Aus dieser Soll-Leistung für die weitere elektrische Maschine kann nun wiederum ein Soll-Drehmoment ermittelt werden, welches beispielsweise gemäß den obigen Beschreibungen durch einen Wechselrichter mit Stromregelung eingeregelt werden kann. Im Ergebnis kann somit auf einfache Art und Weise ein robustes Verfahren zum Betreiben beider elektrischer Maschinen bereitgestellt werden.

Im Rahmen einer Ausführungsform umfasst das Ermitteln der Soll-Drehzahl der Pedalwelle ein Bestimmen einer Soll-Übersetzung des Überlagerungsgetriebes zwischen dem zweiten Element, an welches die Pedalwelle mechanisch angebunden ist, und dem dritten Element, an welches das Abtriebsrad mechanisch angebunden ist. Die Soll-Drehzahl der Pedalwelle kann nun auf Basis der erfassten Ist-Drehzahl des Abtriebsrads und der bestimmten Soll-Übersetzung festgelegt werden. So ergibt sich nämlich die Soll-Drehzahl der Pedalwelle aus der Multiplikation der Soll-Übersetzung mit der Ist-Drehzahl des Abtriebsrads. Zur Bestimmung der Soll-Übersetzung kann hingegen wiederum die Ist-Drehzahl des Rads des muskelbetriebenen Fahrzeugs erfasst werden. Die Drehzahl des Rads kann direkt oder indirekt gemäß den obigen Ausführungen erfasst werden. Die Ist-Drehzahl des Rads korreliert mit der Fahrgeschwindigkeit des Fahrzeugs und kann beispielsweise mittels eines Sensors, wie eines in einer Hinterradnabe des Fahrzeugs integrierten Drehzahlsensors, erfasst werden. Bei einer Fahrgeschwindigkeit von 0, also im Stillstand, kann eine Anfahrübersetzung definiert werden, welche beispielsweise einer Soll-Übersetzung von größer 0 und kleiner 10, beispielsweise kleiner 5, wie 1 bis 2 entsprechen kann. In einer Ausführungsform weist die Anfahrübersetzung einen Wert von 1,5 auf. Mit zunehmender Fahrgeschwindigkeit kann eine Soll-Übersetzung zunehmend in Schnelle definiert sein, beispielsweise auf kleiner 1, wie auf 0,5. Alternativ oder zusätzlich kann die Soll-Übersetzung auch von einem Fahrer über ein Bedienelement vorgegeben oder beeinflusst werden.

Ist die Soll-Übersetzung nun auf Basis der Ist-Drehzahl des Rads des muskelbetriebenen Fahrzeugs bestimmt worden, kann durch Multiplikation dieser Soll-Übersetzung mit der Ist-Drehzahl des Abtriebsrads auf die Soll-Drehzahl der Pedalwelle geschlossen werden. Dies ist in besonders vorteilhafter Art und Weise möglich, wenn die Drehzahl des Abtriebsrads mit sehr guter Genauigkeit erfasst wird, beispielsweise wie bei der oben beschriebenen Ausführungsform über die weitere elektrische Maschine. Zu den hochdynamischen Größen des Regelkreises für die elektrische Maschine zählen nämlich die Drehzahl des Abtriebsrads und die Drehzahl der elektrischen Maschine, die beide mit hoher Genauigkeit erfasst werden müssen. Die Soll-Drehzahl der Pedalwelle kann sich hingegen vergleichsweise langsam ändern, weshalb beispielsweise auch ein gefiltertes Signal verwendet werden kann. Demnach kann für eine Strategiefunktion, die aus der Fahrgeschwindigkeit beziehungsweise der Ist-Drehzahl des Rads eine Soll-Übersetzung ermittelt, ein Sensor mit eher geringer Genauigkeit verwendet werden, da sich die Soll-Übersetzung vergleichsweise langsam ändert. Zudem kann die Soll-Übersetzung beispielsweise auch vom Fahrer vorgegeben werden, ohne dass eine Messgröße verwendet wird.

Die vorliegende Erfindung bezieht sich ferner auf eine Steuereinrichtung, die eingerichtet, also spezifisch hergerichtet, beispielsweise programmiert, ist, um ein Verfahren nach einer der zuvor beschriebenen Ausführungsformen auszuführen. Hierfür kann die Steuereinrichtung eine oder mehrere Schnittstellen aufweisen, über welche sie mit den verschiedenen zur Ausführung des Verfahrens erforderlichen Komponenten verbunden ist. Die eine oder mehreren Schnittstellen können als Ein- und/oder Ausgabeschnittstelle ausgebildet sein, um die verschiedenen Komponenten zu steuern. Die Steuereinrichtung kann in einem Gehäuse der Antriebseinrichtung und/oder außerhalb eines Gehäuses der Antriebseinrichtung vorgesehen sein. Die Steuereinrichtung kann einen oder mehrere Mikroprozessoren aufweisen, die eingerichtet, also spezifisch programmiert, sein können, um das Verfahren auszuführen. Die Steuereinrichtung kann ferner eine oder mehrere Komponenten umfassen, die an den gleichen oder an verschiedenen Orten, beispielsweise auch außerhalb der Antriebseinrichtung und in einer Ausführungsform außerhalb des Fahrzeugs, angeordnet sein können. Hinsichtlich der Ausgestaltungen und Vorteile der einzelnen Merkmale der Steuereinrichtung wird auf die obigen Ausführungen im Zusammenhang mit dem Verfahren zum Betreiben der Antriebseinrichtung verwiesen.

Ferner bezieht sich die vorliegende Erfindung auf eine Antriebseinrichtung für ein muskelbetriebenes Fahrzeug. Die Antriebseinrichtung weist eine Pedalwelle zur Aufnahme einer Muskelkraft eines Fahrers, ein mit einem Rad des muskelbetriebenen Fahrzeugs mechanisch wirkverbindbares Abtriebsrads und ein als Planetengetriebe ausgestaltetes Überlagerungsgetriebe mit einem ersten, zweiten und dritten Element auf. Ferner umfasst die Antriebseinrichtung eine elektrische Maschine und eine Steuereinrichtung gemäß der zuvor beschriebenen Ausführungsform. Die Pedalwelle ist an das zweite Element, das Abtriebsrad an das dritte Element und die elektrische Maschine an das erste Element des Überlagerungsgetriebes mechanisch angebunden. Ferner kann die Antriebseinrichtung eine weitere elektrische Maschine aufweisen, die an das dritte Element des Überlagerungsgetriebes mechanisch angebunden sein kann. Das erste Element des Überlagerungsgetriebes kann als Sonnenrad, das zweite Element des Überlagerungsgetriebes als Planetenträger und das dritte Element des Überlagerungsgetriebes als Hohlrad ausgebildet sein. Hinsichtlich der Ausgestaltungen und Vorteile der einzelnen Elemente wird auf die obigen Ausführungen im Zusammenhang mit dem Verfahren zum Betreiben der Antriebseinrichtung verwiesen.

Ferner bezieht sich die vorliegende Erfindung auf ein Fahrzeug mit mindestens zwei Rädern und einer Antriebseinrichtung nach einer der zuvor beschriebenen Ausführungsformen. Das Abtriebsrad der Antriebseinrichtung ist über ein Kraftübertragungselement und einen Freilauf, beispielsweise einen Nabenfreilauf, mit einem der Räder zum Antrieb des Fahrzeugs gekoppelt. Bei dem Fahrzeug kann es sich um ein Zweirad, beispielsweise ein Pedelec oder E-Bike, handeln, wie oben ausgeführt. Hinsichtlich des Verständnisses und der Vorteile der einzelnen Merkmale wird auf die obigen Ausführungen im Zusammenhang mit dem Verfahren zum Betreiben der Antriebseinrichtung verwiesen.

### Kurze Beschreibung der Figuren

Figur 1 zeigt eine Antriebseinrichtung für ein muskelbetriebenes Fahrzeug gemäß einer Ausführungsform der vorliegenden Erfindung.
Figur 2 zeigt ein Verfahren zum Betreiben der Antriebseinrichtung aus Figur 1 gemäß einer Ausführungsform der vorliegenden Erfindung.

### Detaillierte Beschreibung von Ausführungsformen

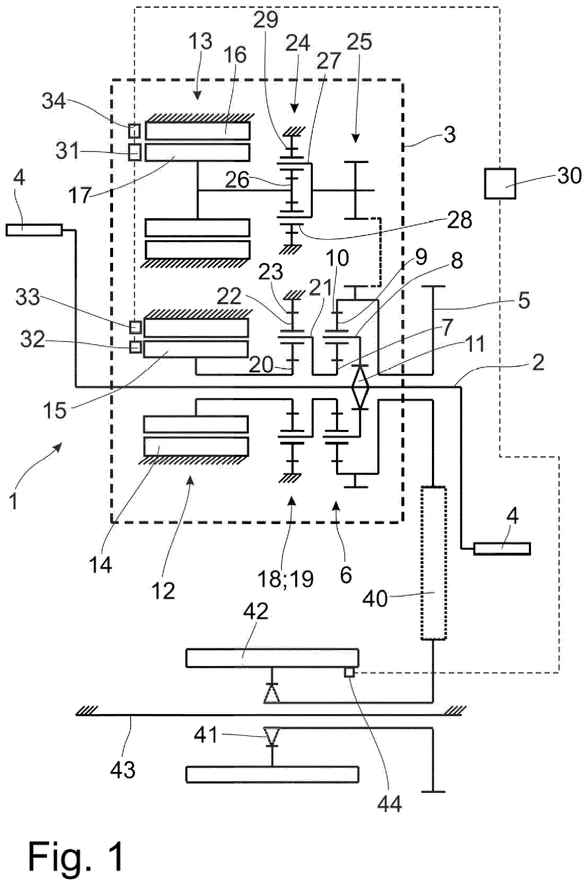

Figur 1 zeigt eine Antriebseinrichtung 1 für ein muskelbetriebenes Fahrzeug gemäß einer Ausführungsform der vorliegenden Erfindung. Die Antriebseinrichtung 1 umfasst eine Pedalwelle 2 sowie ein Gehäuse 3. An der Pedalwelle 2 sind Pedale 4 permanent drehfest montiert, über welche ein Fahrer des muskelbetriebenen Fahrzeugs ein Drehmoment in die Antriebseinrichtung 1 einleiten kann. Das Gehäuse 3 der Antriebseinrichtung 1 kann an einem Rahmen des muskelbetriebenen Fahrzeugs befestigt werden. Bei dem muskelbetriebenen Fahrzeug handelt es sich in der vorliegenden Ausführungsform um ein Fahrrad, beispielsweise um ein Pedelec. Darüber hinaus umfasst die Antriebseinrichtung 1 ein Abtriebsrad 5, welches als Kettenblatt ausgebildet sein kann, um die Antriebseinrichtung 1 mit einem lediglich schematisch dargestellten Hinterrad 42 des Fahrrads mechanisch wirkzuverbinden, beispielsweise über eine Kette oder einen Riemen 40. Das Hinterrad 42 ist dabei drehbar auf einer starren Achse 43 gelagert. In dem Drehmomentübertragungspfad zwischen dem Abtriebsrad 5 und dem Hinterrad 42 ist ein Freilauf 41 vorgesehen, in der vorliegenden Ausführungsform ein Nabenfreilauf.

Die Antriebseinrichtung 1 gemäß der vorliegenden Ausführungsform weist ein als Planetengetriebe ausgestaltetes Überlagerungsgetriebe 6 auf, das koaxial zur Pedalwelle 2 angeordnet ist. Das Überlagerungsgetriebe 6 umfasst ein als Sonnenrad ausgebildetes erstes Element 7, ein als Planetenträger ausgebildetes zweites Element 8, auf dem Planetenräder 9 drehbar gelagert sind, und ein als Hohlrad ausgebildetes drittes Element 10. Die Pedalwelle 2 ist an den Planetenträger 8 des Überlagerungsgetriebes 6 mechanisch angebunden. In der vorliegenden Ausführungsform erfolgt die mechanische Wirkverbindung über einen Freilauf 11. In einer alternativen Ausführungsform ist der Freilauf 11 nicht vorgesehen, wobei die Pedalwelle 2 beispielsweise permanent drehfest ohne weitere Komponenten dazwischen mit dem Planetenträger 8 mechanisch verbunden sein kann. Das Abtriebsrad 5 ist mit dem Hohlrad 10 des Überlagerungsgetriebes 6 permanent drehfest verbunden.

Ferner umfasst die Antriebseinrichtung 1 eine elektrische Maschine 12 und eine weitere elektrische Maschine 13. Die erste elektrische Maschine 12 umfasst einen Stator 14 sowie einen Rotor 15. Die zweite elektrische Maschine 13 umfasst ebenfalls einen Stator 16 sowie einen Rotor 17. Die erste elektrische Maschine 12 ist koaxial zur Pedalwelle 2 angeordnet, während die zweite elektrische Maschine 13 achsparallel beabstandet zur Pedalwelle 2 angeordnet ist. Dabei sind die Statoren 14 und 16 der ersten 12 beziehungsweise zweiten elektrischen Maschine 13 jeweils am Gehäuse 3 permanent drehfest festgesetzt. Die Rotoren 15 beziehungsweise 17 der ersten 12 beziehungsweise zweiten elektrischen Maschine 13 sind jeweils koaxial zu den Statoren 14 beziehungsweise 16 und drehbar innerhalb derselben vorgesehen.

Der Rotor 15 der ersten elektrischen Maschine 12 ist mit dem Sonnenrad 7 des Überlagerungsgetriebes 6 in der vorliegenden Ausführungsform über ein Vorübersetzungsgetriebe 18 mechanisch wirkverbunden. Das Vorübersetzungsgetriebe 18 weist in der vorliegenden Ausführungsform einen Planetenradsatz 19 auf. Der Planetenradsatz 19 weist ein Sonnenrad 20, einen Planetenträger 21 mit einem darauf drehbar gelagerten Planetenrad 22 sowie ein Hohlrad 23 auf. Das Hohlrad 23 des Planetenradsatzes 19 des Vorübersetzungsgetriebes 18 ist permanent drehfest am Gehäuse 3 festgesetzt. Der Planetenträger 21 des Planetenradsatzes 19 des Vorübersetzungsgetriebes 18 ist permanent drehfest mit dem Sonnenrad 7 des Überlagerungsgetriebes 6 verbunden. Das Sonnenrad 20 des Planetenradsatzes 19 des Vorübersetzungsgetriebes 18 ist permanent drehfest mit dem Rotor 15 der ersten elektrischen Maschine 12 verbunden.

Der Rotor 17 der zweiten elektrischen Maschine 13 ist über eine Vorübersetzung 24 und ein Stirnradgetriebe 25 mit dem Hohlrad 10 des Überlagerungsgetriebes 6 mechanisch wirkverbunden. Die Vorübersetzung 24 ist dabei in der vorliegenden Ausführungsform als Planetenradsatz ausgebildet, der ein Sonnenrad 26, einen Planetenträger 27 mit einem darauf drehbar gelagerten Planetenrad 28 sowie ein Hohlrad 29 aufweist. In der vorliegenden Ausführungsform ist das Hohlrad 29 permanent drehfest an dem Gehäuse 3 festgesetzt und das Sonnenrad 26 permanent drehfest mit dem Rotor 17 der zweiten elektrischen Maschine 13 verbunden. Der Planetenträger 27 der Vorübersetzung 24 ist über das Stirnradgetriebe 25 mit dem Hohlrad 10 des Überlagerungsgetriebes 6 mechanisch wirkverbunden.

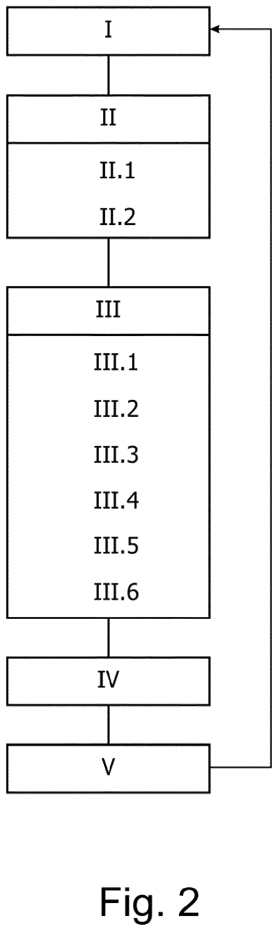

Darüber hinaus umfasst die Antriebseinrichtung 1 eine Steuereinrichtung 30 zum Steuern der ersten 12 beziehungsweise zweiten elektrischen Maschine 13. Hierfür sind die elektrischen Maschinen 12 beziehungsweise 13 mit der Steuereinrichtung 30 jeweils über eine geeignete Schnittstelle verbunden. Die Steuereinrichtung 30 umfasst einen Mikroprozessor, der eingerichtet ist, um das im Folgenden unter Bezugnahme auf Fig. 2 beschriebene Verfahren zum Betreiben der in Fig. 1 gezeigten Antriebseinrichtung 1 auszuführen. Das im Folgenden beschriebene Verfahren bezieht sich auf einen normalen Fahrbetrieb, bei dem der Fahrer tritt und der Freilauf 41 daher keine Differenzdrehzahl aufweist. Weist die Antriebseinrichtung 1 ferner den Freilauf 11 zwischen der Pedalwelle 2 und dem Planetenträger 8 auf, so weist auch dieser Freilauf 11 keine Differenzdrehzahl auf. In einem nullten Schritt (nicht gezeigt) kann vor den Ausführungen des Verfahrens überprüft werden, ob solch ein Zustand vorliegt und an dem Freilauf 41 und ggf. dem Freilauf 11 keine Differenzdrehzahl vorliegt.

In einem ersten Schritt I wird nun die Ist-Drehzahl des Abtriebsrads 5 durch die Steuereinrichtung 30 erfasst. Dies geschieht in der vorliegenden Ausführungsform über einen Drehzahlsensor 31 der zweiten elektrischen Maschine 13, welcher die Drehzahl des Rotors 17 erfasst. Durch das Erfassen der Drehzahl des Rotors 17 der zweiten elektrischen Maschine 13 mittels des Drehzahlsensors 31 kann aufgrund der konstanten Übersetzungen der Vorübersetzung 24 und der Stirnradstufe 25 auf die Drehzahl des Abtriebsrads 5 geschlossen werden. Die Genauigkeit der so erfassten Drehzahl des Abtriebsrads 5 ist sehr hoch, da die zweite elektrische Maschine 13 aufgrund der Vorübersetzungen 24 und 25 schneller dreht als das Abtriebsrad 5 selbst. Es wird kein zusätzlicher Sensor zur Erfassung der Drehzahl des Abtriebsrads 5 benötigt, da auf den in der zweiten elektrischen Maschine 13 ohnehin vorhandenen Drehzahlsensor 31 zurückgegriffen wird.

In einem Folgeschritt II ermittelt die Steuereinrichtung 30 nun eine Soll-Drehzahl der Pedalwelle 2. Die Soll-Drehzahl der Pedalwelle 2, also eine Soll-Trittfrequenz für den Fahrer, wird mittels einer Strategiefunktion bestimmt. In der vorliegenden Ausführungsform wird die Soll-Drehzahl der Pedalwelle 2 anhand einer in einem Schritt II.1 bestimmten Soll-Übersetzung des Überlagerungsgetriebes 6 und der in Schritt I ermittelten Ist-Drehzahl des Abtriebsrads 5 in bestimmt. Bei der Soll-Übersetzung des Planetenradsatzes 6 handelt es sich um die Übersetzung zwischen dem Planetenträger 8, also der Pedalwelle 2, und dem Hohlrad 10, also dem Abtriebsrad 5. Die Soll-Drehzahl der Pedalwelle 2 kann in einem Schritt II.2 durch Multiplikation der Soll-Übersetzung des Überlagerungsgetriebes 6 mit der Ist-Drehzahl des Abtriebsrads 5 festgelegt werden.

In der vorliegenden Ausführungsform wird in Schritt II.1 die Soll-Übersetzung mittels eines Sensors 44 durch eine Strategiefunktion bestimmt. Durch den Sensor 44 wird eine Ist-Drehzahl des Rads 42 gegenüber der starren Achse 43 und dadurch eine Fahrgeschwindigkeit des Fahrrads erfasst. Die Soll-Übersetzung wird im Rahmen dieser Ausführungsform in Schritt II.1 basierend auf der Fahrgeschwindigkeit des Fahrrads bestimmt. Wird durch den Sensor 44 beispielsweise erfasst, dass sich das Fahrrad im Stillstand befindet, kann eine Anfahrübersetzung im Schritt II.1 definiert werden, welche beispielsweise zwischen 1 und 2 liegt und in einer Ausführungsform 1,5 beträgt. Mit zunehmender Fahrgeschwindigkeit kann im Schritt II.1 die Soll-Übersetzung des Überlagerungsgetriebes 6 zunehmend ins Schnelle definiert werden, beispielsweise in einer Ausführungsform auf 0,5. Alternativ oder zusätzlich kann die Soll-Übersetzung durch einen Fahrer, beispielsweise durch ein nicht gezeigtes Bedienelement, vorgegeben oder beeinflusst werden. Da die Strategiefunktion im Rahmen dieser Ausführungsform so ausgebildet sein kann, dass sich die Soll-Übersetzung in Abhängigkeit von der Fahrgeschwindigkeit vergleichsweise langsam ändert, kann ein Sensor 44 verwendet werden, der eine verhältnismäßig geringe Genauigkeit aufweist. So ist ein kosteneffizientes Bestimmen einer Soll-Übersetzung möglich.

Anschließend wird durch die Steuereinrichtung 30 die erste elektrische Maschine 12 basierend auf der in Schritt I erfassten Ist-Drehzahl des Abtriebsrads 5 und der im Schritt II ermittelten Soll-Drehzahl der Pedalwelle 2 angesteuert. Hierzu wird zunächst in Schritt III.1 die Soll-Drehzahl der elektrischen Maschine 12, genauer gesagt des Rotors 15 der elektrischen Maschine 12, bestimmt. In Schritt III.1 wird die Drehzahlgleichung des Überlagerungsplanetenradsatzes 6 für die Drehzahl des Sonnenrads 7 gelöst. Aus dieser auch als Willis-Gleichung bekannten Beziehung ergibt sich für die Drehzahl_{Sonne 7} = (1 - i₀) x Drehzahl_{Steg 8} + i₀ x Drehzahl_{Hohlrad 10}, wobei es sich bei io um die konstante Standgetriebeübersetzung handelt. Bei der Drehzahl_{Hohlrad 10} handelt es sich um die Ist-Drehzahl des Abtriebsrads 5, welche in Schritt I erfasst wurde. Bei der Drehzahl_{Steg 8} handelt es sich um die Soll-Drehzahl der Pedalwelle 2, welche im Schritt II ermittelt wurde. Aus den in Schritten I und II erfassten beziehungsweise ermittelten Größen kann demnach die Soll-Drehzahl des Sonnenrads 7 des Überlagerungsplanetenradsatzes 6 in einem Schritt III.1 bestimmt werden. Aufgrund der konstanten Vorübersetzung des Planetenradsatzes 18, 19 kann so auch die Soll-Drehzahl des Rotors 15 der ersten elektrischen Maschine 12 bestimmt werden.

Das Ansteuern der elektrischen Maschine in Schritt III umfasst neben dem Bestimmen der Soll-Drehzahl der elektrischen Maschine in Schritt III.1 ferner in einem Schritt III.2 das Erfassen einer Ist-Drehzahl der elektrischen Maschine 12, genauer gesagt des Rotors 15 der elektrischen Maschine 12. Hierfür wird auf die Messung eines Drehzahlsensors 32 zurückgegriffen, welcher in der ersten elektrischen Maschine 12 ohnehin vorhanden ist. Die Steuereinrichtung 30 vergleicht nun die in Schritt III.1 bestimmte Soll-Drehzahl des Rotors 15 der elektrischen Maschine 12 mit der in Schritt III.2 durch den Drehzahlsensor 32 erfassten Ist-Drehzahl des Rotors 15 der elektrischen Maschine 12 und gibt in einem Schritt III.3 basierend auf einer Differenz dieser Größen eine Stellgröße an die elektrische Maschine 12 aus. In der vorliegenden Ausführungsform wird in Schritt III.3 dabei als Stellgröße ein Soll-Drehmoment von der Steuereinrichtung 30 an einen Wechselrichter mit Stromregelung 33 der ersten elektrischen Maschine ausgegeben, welcher über Stromregelung die elektrische Maschine 12 derart einregelt, dass sie das Soll-Drehmoment bereitstellt.

Das Ansteuern III der elektrischen Maschine 12 umfasst darüber hinaus einen Schritt III.4 zum Begrenzen der an die elektrische Maschine 12 ausgegebenen Stellgrö-βe auf Werte, die zu einem einer Drehrichtung der Pedalwelle 2 entgegenwirkenden Betrieb der elektrischen Maschine 12 führen. In anderen Worten wird die Stellgröße auf solche Soll-Drehmomente begrenzt, welche für die Pedalwelle 2 abstützend wirken. Somit wird Drehmoment mit nur einem Vorzeichen zugelassen, und zwar mit solch einem Vorzeichen, welches das Pedalmoment des Fahrers abstützt, also der Pedalbewegung des Fahrers entgegenwirkt. Im Ergebnis wird durch diesen Schritt III.4 demnach das Pedalmoment des Fahrers durch die erste elektrische Maschine 12 abgestützt und ausgeschlossen, dass diese die Pedalwelle 2 antreibt. Letzteres könnte sich für den Fahrer unangenehm anfühlen und auch die unerwünschte Folge haben, dass der Fahrer die Füße vom Pedal nimmt und das Fahrrad dennoch selbstständig weiterfährt.

Darüber hinaus umfasst das Ansteuern III der ersten elektrischen Maschine 12 einen Schritt III.5 zum Überprüfen, ob die in Schritt III.1 bestimmte Soll-Drehzahl für eine bestimmte Zeit, beispielsweise 2 Sekunden, im Wesentlichen den Wert 0 beträgt und gleichzeitig das in Schritt III.3 an den Wechselrichter 33 ausgegebene Soll-Drehmoment betragsmäßig einen vorbestimmten Schwellwert überschreitet. In solch einem Fall wird in Schritt III.6 die Soll-Drehzahl auf eine betragsmäßige Mindestdrehzahl angehoben. Dies hat zur Folge, dass die Leistungselektronik der elektrischen Maschine 12 gleichmäßig belastet wird und die Leistungshalbleiter einer Phase nicht zu warm werden. Im Fahrzeugstillstand und bei geringen Fahrgeschwindigkeiten wird das Vorzeichen dabei so gewählt, dass sich die Trittfrequenz erhöht, die erste elektrische Maschine 12 also in Richtung der Pedalwellendrehzahl 2 beim Fahren dreht. Das bedeutet zum Beispiel, dass, wenn der Fahrer ein Pedal belastet und das Fahrrad nicht losfährt, weil es beispielsweise festgebremst ist, das Pedal 4 eine Zeit mithilfe der ersten elektrischen Maschine 12 festgehalten wird und nach der vordefinierten Zeit langsam nachgibt, da die erste elektrische Maschine 12 beginnt, mit der Mindestdrehzahl vorwärtszudrehen.

Darüber hinaus umfasst das Verfahren der vorliegenden Erfindung im Schritt IV das Bestimmen eines durch den Fahrer auf die Pedalwelle 2 aufgebrachten Moments. Dies erfolgt in der vorliegenden Ausführungsform basierend auf einem Drehmomentwert des Wechselrichters mit Stromregelung 33. In einer Ausführungsform wird hierfür das in Schritt III.3 ausgegebene Soll-Drehmoment verwendet, um das Fahrermoment zu bestimmen. Dies führt zu einer ausreichend hohen Genauigkeit, weil das Ist-Drehmoment der elektrischen Maschine 12 dem Soll-Drehmoment gut folgt. In einer alternativen Ausführungsform wird in Schritt IV durch die Steuereinrichtung 30 ein Ist-Drehmoment der elektrischen Maschine 12 bei dem Wechselrichter mit Stromregelung 33 abgefragt. Dieses Ist-Drehmoment wird nun verwendet, um das Fahrermoment zu bestimmen. Auf Basis des Ist- und/oder Soll-Drehmoments der elektrischen Maschine 12, welche an das Sonnenrad 7 des Überlagerungsgetriebes 6 angebunden ist, kann nun das Moment am Planetenträger 8 und damit an der Pedalwelle 2 über die Gleichung 1 zu (1 - io) ermittelt werden, wobei io die Standübersetzung des Überlagerungsgetriebes 6 ist. Dieses Verhältnis ist unabhängig von den Drehzahlen, was bedeutet, dass bei einem io von beispielsweise -2 das Stegmoment dreimal so hoch wie das Sonnenmoment ist. So ist es möglich, auf einfache Art und Weise das durch den Fahrer auf die Pedalwelle 2 aufgebrachte Pedalmoment zu ermitteln.

In einem Folgeschritt V wird nun die zweite elektrische Maschine 13 auf Basis des in Schritt IV bestimmten Fahrermoments angesteuert, damit sich eine gewünschte Unterstützung des Fahrers ergibt. So ist in der Steuereinrichtung 30 in der vorliegenden Ausführungsform eine Strategiefunktion hinterlegt, welche eine gewünschte gesamte Unterstützungsleistung für den Fahrer durch beide E-Maschinen 12, 13 definiert. Die aktuelle Leistung der ersten elektrischen Maschine 12 kann, wie oben beschrieben, über das Ist- und/oder Soll-Drehmoment bestimmt werden. Die Soll-Leistung für die zweite elektrische Maschine 13 wird durch die Steuereinrichtung 30 im Schritt V als Differenz zwischen der gewünschten Gesamtleistung und der Leistung der ersten elektrischen Maschine 12 ermittelt. Aus der Soll-Leistung wird in Schritt V wiederum ein Soll-Drehmoment durch die Steuereinrichtung 30 bestimmt, welches an einen Wechselrichter mit Stromregelung 34 der zweiten elektrischen Maschine 13 ausgegeben wird. Der Regler 34 regelt das Ist-Drehmoment der zweiten elektrischen Maschine 13 auf dieses Soll-Drehmoment ein. Anschließend kehrt das Verfahren zurück zu Schritt I.

### Bezugszeichen

- 1: Antriebseinrichtung
- 2: Pedalwelle
- 3: Gehäuse
- 4: Pedale
- 5: Abtriebsrad
- 6: Überlagerungsgetriebe
- 7,20,26: Sonnenrad
- 8,21,27: Planetenträger
- 9,22,28: Planetenrad
- 10,23,29: Hohlrad
- 11: Freilauf
- 12,13: elektrische Maschine
- 14,16: Stator
- 15,17: Rotor
- 18: Vorübersetzungsgetriebe
- 19: Planetenradsatz
- 24: Vorübersetzung
- 25: Stirnradgetriebe
- 30: Steuereinrichtung
- 31,32: Drehzahlsensor
- 33,34: Regler
- 40: Ketten/Riemen
- 41: Nabenfreilauf
- 42: Hinterrad
- 43: Achse
- 44: Sensor
- I: Erfassen Ist-Drehzahl Abtriebsrad
- II: Ermitteln Soll-Drehzahl Pedalwelle
- II.1: Bestimmen Soll-Übersetzung Überlagerungsgetriebe
- II.2: Festlegen Soll-Drehzahl Pedalwelle
- III: Ansteuern elektrische Maschine
- III.1: Bestimmen Soll-Drehzahl elektrische Maschine
- III.2: Erfassen Ist-Drehzahl elektrische Maschine
- III.3: Ausgeben Stellgröße elektrische Maschine
- III.4: Begrenzen Stellgröße
- III.5: Überprüfen, ob Soll-Drehzahl im Wesentlichen Null
- III.6: Anheben Soll-Drehzahl elektrische Maschine
- IV: Bestimmen Fahrermoment Pedalwelle
- V: Ansteuern weitere elektrische Maschine

## Patentansprüche

1. Verfahren zum Betreiben einer Antriebseinrichtung (1) für ein muskelbetriebenes Fahrzeug, wobei die Antriebseinrichtung (1) eine Pedalwelle (2) zur Aufnahme einer Muskelkraft eines Fahrers, ein als Planetengetriebe ausgestaltetes Überlagerungsgetriebe (6) mit einem ersten (7), zweiten (8) und dritten Element (10), ein mit einem Rad (42) des muskelbetriebenen Fahrzeugs mechanisch wirkverbindbares Abtriebsrad (5) und eine elektrische Maschine (12) aufweist, wobei die Pedalwelle (2) an das zweite Element (8), das Abtriebsrad (5) an das dritte Element (10) und die elektrische Maschine (12) an das erste Element (7) des Überlagerungsgetriebes (6) mechanisch angebunden ist, umfassend ein Erfassen (I) der Ist-Drehzahl des Abtriebsrads (5), ein Ermitteln (II) einer Soll-Drehzahl der Pedalwelle (2), und ein Ansteuern (III) der elektrischen Maschine (12) basierend auf der erfassten Ist-Drehzahl des Abtriebsrads (5) und der ermittelten Soll-Drehzahl der Pedalwelle (2).

2. Verfahren nach Anspruch 1, **dadurch gekennzeichnet, dass** die Antriebseinrichtung (1) eine weitere mit dem Abtriebsrad (5) mechanisch wirkverbundene elektrische Maschine (13) aufweist, und dadurch, dass das Erfassen (I) der Ist-Drehzahl des Abtriebsrads (5) ein Erfassen einer Drehzahl der weiteren elektrischen Maschine (13) umfasst.

3. Verfahren nach einem der vorhergehenden Ansprüche, **dadurch gekennzeichnet, dass** das Ansteuern (III) der elektrischen Maschine (12) ein Bestimmen (III.1) einer Soll-Drehzahl der elektrischen Maschine (12) basierend auf der erfassten Ist-Drehzahl des Abtriebsrads (5) und der ermittelten Soll-Drehzahl der Pedalwelle (2), ein Erfassen (III.2) einer Ist-Drehzahl der elektrischen Maschine (12) und ein Ausgeben (III.3) einer Stellgröße an die elektrische Maschine (12) basierend auf einem Unterschied zwischen der Soll- und der Ist-Drehzahl der elektrischen Maschine (12) umfasst.

4. Verfahren nach Anspruch 3, **dadurch gekennzeichnet, dass** das Ansteuern (III) der elektrischen Maschine (12) ferner ein Begrenzen (III.4) der an die elektrische Maschine (12) ausgegebenen Stellgröße auf Werte umfasst, die zu einem einer Drehrichtung der Pedalwelle (2) entgegenwirkenden Betrieb der elektrischen Maschine (12) führen.

5. Verfahren nach Anspruch 3 oder 4, **dadurch gekennzeichnet, dass** das Ansteuern (III) der elektrischen Maschine ferner ein Überprüfen (III.5), ob die Soll-Drehzahl der elektrischen Maschine (12) für eine vorbestimmte Zeitdauer im Wesentlichen null ist und gleichzeitig die an die elektrische Maschine (12) ausgegebene Stellgröße betragsmäßig einen vorbestimmten Schwellwert überschreitet, und ein Anheben (III.6) der Soll-Drehzahl der elektrischen Maschine (12) auf eine Mindestdrehzahl umfasst.

6. Verfahren nach einem der vorhergehenden Ansprüche, **dadurch gekennzeichnet, dass** das Ansteuern (III) der elektrischen Maschine (12) ein Ausgeben (III.3) eines Soll-drehmoments an einen Regler (33) der elektrischen Maschine (12) aufweist und das Verfahren ferner ein Bestimmen (IV) eines durch den Fahrer auf die Pedalwelle (2) aufgebrachten Moments basierend auf mindestens einem Drehmomentwert des Reglers (33) umfasst.

7. Verfahren nach Ansprüchen 2 und 6, **dadurch gekennzeichnet, dass** das Verfahren ferner ein Ansteuern (V) der weiteren elektrischen Maschine (13) auf Basis des durch den Fahrer auf die Pedalwelle (2) aufgebrachten Moments umfasst.

8. Verfahren nach einem der vorhergehenden Ansprüche, **dadurch gekennzeichnet, dass** das Ermitteln (II) der Soll-Drehzahl der Pedalwelle (2) ein Bestimmen (II.1) einer Soll-Übersetzung des Überlagerungsgetriebes (6) zwischen dem zweiten (8) und dem dritten Element (10) und ein Festlegen (II.2) einer Soll-Drehzahl auf Basis der erfassten Ist-Drehzahl des Abtriebsrads (5) und der bestimmten Soll-Übersetzung umfasst.

9. Verfahren nach Anspruch 8, **dadurch gekennzeichnet, dass** das Bestimmen (II.1) der Soll-Übersetzung ein Erfassen einer Ist-Drehzahl des Rads (42) des muskelbetriebenen Fahrzeugs umfasst.

10. Steuereinrichtung (30), die eingerichtet ist, um ein Verfahren nach einem der vorhergehenden Ansprüche auszuführen.

11. Antriebseinrichtung (1) für ein muskelbetriebenes Fahrzeug, wobei die Antriebseinrichtung (1) eine Pedalwelle (2) zur Aufnahme einer Muskelkraft eines Fahrers, ein als Planetengetriebe ausgestaltetes Überlagerungsgetriebe (6) mit einem ersten (7), zweiten (8) und dritten Element (10), ein mit einem Rad (42) des muskelbetriebenen Fahrzeugs mechanisch wirkverbindbares Abtriebsrad (5), eine elektrische Maschine (12) und eine Steuereinrichtung (30) nach Anspruch 10 aufweist, wobei die Pedalwelle (2) an das zweite Element (8), das Abtriebsrad (5) an das dritte Element (10) und die elektrische Maschine (12) an das erste Element (7) des Überlagerungsgetriebes (6) mechanisch angebunden ist.

12. Antriebseinrichtung (1) nach Anspruch 11, **dadurch gekennzeichnet, dass** die Antriebseinrichtung (1) eine weitere elektrische Maschine (13) aufweist, die an das dritte Element (10) des Überlagerungsgetriebes (6) mechanisch angebunden ist, wobei das erste Element (7) des Überlagerungsgetriebes (6) als Sonnenrad, das zweite Element (8) des Überlagerungsgetriebes (6) als Planetenträger und das dritte Element (10) des Überlagerungsgetriebes (6) als Hohlrad ausgebildet ist.

13. Fahrzeug mit mindestens zwei Rädern und einer Antriebseinrichtung (1) nach Anspruch 11 oder 12, wobei das Abtriebsrad (5) über ein Kraftübertragungselement (40) und einen Freilauf (41) mit einem der Räder (42) zum Antrieb des Fahrzeugs gekoppelt ist.
